# EUROPEAN PATENT APPLICATION

(11) **EP 2 879 261 A1**
(43) Date of publication of application: **03.06.2015**
(21) Application number: 14306902.9
(22) Date of filing: 27.11.2014
(51) Int. Cl.: H02J 3/14, F24F 11/00

(54) **System for managing energy consumption in heating, ventilation and air-conditioning system**

(30) Priority: 27.11.2013 IN CH54602013
(71) Applicant: Schneider Electric Industries SAS, 92500 Rueil-Malmaison (FR)
(72) Inventor: Pai, Rohit, 560 066 Bangalore (IN)
(74) Representative: Manitz, Finsterwald & Partner GbR

(57) **Abstract**

The system for managing energy consumption in HVAC system has a control system which dynamically switches the electrical power supplied and generates a timing schedule to precondition the building with respect to the different inputs, time slabs and the tariff opted so as to efficiently manage the energy consumption and to minimize the electricity bill. A storage unit gets charging with the input source and supply power to the conditioning system as communicated by the control unit. The control unit is configured to generate a timing schedule to precondition the building based on one or group selected from the utility tariff information, user occupancy schedule, user travel habits, weather forecast, and manually scheduled inputs from the user and power price from utility. The control unit signals to pre-operates the conditioning system to maintain desired temperature when the utility energy prices are low and operate the conditioning system at low electricity consumption when the utility energy prices are high.

## Description

### Field of invention:

The present invention relates to a system for managing energy consumption, and more particularly to a control system which dynamically switches the electrical power supplied and generates a timing schedule to precondition the building with respect to the different time slabs, user inputs, travel habits, weather forecast, and the tariff opted so as to efficiently manage the energy consumption and to minimize the electricity bill.

### Background of the invention:

In power supply to a building, the power supply vendors offer Time of Use tariff plans where the electricity per unit price will vary depending on the time popularly known as peak, off peak and shoulder time slabs. Customers with advanced meters and time of use tariffs pay different amounts for their electricity over these three different time periods. Power prices are cheaper in the off peak period and the peak time prices vary from 5 to 10 times the off peak period prices depending on countries.

Generally the power consumption in heating, ventilation and air conditioning (HVAC) system is not monitored in time synchronization with the utility tariff and time of use periods. The operation of HVAC unit at peak time of utility price is not economical and costs more to the user. The usual energy management system can mainly perform the tasks such as switching off the appliances if no user exists and the standby power cutoff for HVAC.

However, the energy saving by the present control unit is not so great within the consumer entity employing the conventional HVAC energy management system. To realize increased energy saving, it is necessary to actively collaborate in reducing energy consumption in peak hours and utilize off peak hours more efficiently. User has to pay heavy electricity price if the consumption during the peak hour is not controllable.

Moreover, user has to remember the time slabs and has to manually program the usage of the power source, to manually shut the HVAC system during peak time, which is not convenient to operate. Further, lack of communication between inverter systems and the user, and communication failure between the grid and the user also become a big problem in regulating the power consumption.

Sometimes the user may be away from the place where inverter is installed, resulting uncontrolled electricity distribution. Thus the conventional approach fails to efficiently regulate the electricity consumption in HVAC, since the tariff changes are linked more directly to the supply and demand for power.

Thus, it is desirable to provide an improved control system for managing the energy consumption in HVAC system, which overcomes the disadvantages of the conventional power consumption control approaches.

Therefore, it is necessary to provide an improved system for HVAC system which enables us to condition the building in a cost effective and desired manner. It is desirable to provide a system which dynamically switches the electrical power supplied and generate a timing schedule to precondition the building with respect to predefined conditions, different time slabs and the tariff opted so as to efficiently manage the energy consumption and to minimize the electricity bill.

### Objective of the invention:

The main object of the present invention is to provide an improved system and method for managing the energy consumption in HVAC installed in a building, which overcomes the disadvantages of the conventional power consumption control approaches.

Another object of the present invention is to dynamically switch the electrical power supplies with respect the different time slabs and the tariff opted.

Another object of the present invention is to configure the appliances to run on utility power during off peak hours and to charge the storage unit, as per requirement.

### Summary of the invention:

The present invention which achieves the objectives relates to a system for managing energy consumption in heating, ventilation and air conditioning system in a building. The energy input source receiving power from the utility power supplies power through distribution units to the conditioning unit. A storage unit, usually a battery unit gets charged with the utility power source and supply power to the conditioning system as communicated by the control unit. The control unit incorporates a data analyzer, configuration units and communication units. An internal database is provided in the control unit for storage and retrieval of power tariff information, whether forecast information, occupancy information, user travel information, power line configurations, battery charge information, user manual inputs and other system requirements. The communication unit establishes communication to receive the power tariff information from the power grid and to transfer data in between the control unit, storage unit, sensors, user inputs, internal database and event manager.

The control unit is configured to generate a timing schedule to precondition the building based on one or group selected from the utility tariff information, user occupancy schedule, user travel habits, weather forecast, and manually scheduled inputs from the user and power tariff from utility. The control unit signals to pre-operate the conditioning system through the HVAC optimizer to maintain the desired temperature when the utility energy prices are low and operate the conditioning system at low electricity consumption when the utility energy prices are high.

The system dynamically switches the electrical power supplies with respect to the different time slabs and the tariff opted and efficiently manages the energy consumption to minimize the electricity bill. The energy consumption management system has a utility interface module configured with the utility source i.e. power grid to supply the electrical power through the distribution lines to the HVAC system in required load ratings.

The storage unit is charged with the utility source and supplies power to the required lines as communicated. The storage interface module measures all the electrical parameters of the storage unit and controls the charging and discharging of the storage unit and the power flow from the storage unit to the loads lines in the conditioning system.

A user interface module is provided to enter the inputs by the user. The user interface module has a touch screen and a wireless user interface for making the inputs to the system and enabling the user to monitor the various data with the system. An alternate power source interface module is also provided to interface the alternate power source like wind, solar, geothermal etc into the system. An event manager is configured with the system for registering the events and communicating said events to the user.

The HVAC load is driven by taking inputs from occupancy sensor, user time schedule and information from utility. In this system, the power stored in battery which is charged at off-peak time is used to drive HVAC control unit at optimum load. The system can even derive power from Electric vehicle battery in dosing the same. The HVAC energy management system according to the present invention dynamically precondition the building with respect to various inputs such as, low power tariff, occupancy level and weather forecast information, etc., thus efficiently controlling the energy consumption and minimizing the electricity bill.

In a method according to the invention, the method comprises advantageous embodiments wherein a booster module is incorporated within the boost the startup of conditioning system and the control unit shuts down the booster after the start up of the conditioning unit, and/or wherein the manually scheduled inputs and time slab information are entered by the user, and/or wherein the control unit receives the required inputs from various sensors and input units placed in the system, and/or wherein said communication unit establishes communication to receive the power tariff information from the power grid and to transfer data in between the control unit, storage unit, user input devices, internal database, data analyzer and event manager, and/or wherein the HVAC optimizer boost the startup of conditioning system and get automatically shut down after the start up of the conditioning unit, and/or wherein the said control unit anticipates and applies HVAC operational conditions including user desired temperature depending on the history data log.

### Brief description of drawings:

Referring now to the below drawings wherein the showings are for the purpose of illustrating a preferred embodiment of the invention only, and not for the purpose of limiting the same.
Fig. 1 represents the system for efficiently managing the energy consumption in HVAC, in accordance to the exemplary embodiment of the present invention.
Fig. 2 shows a flow chart for efficiently managing the energy consumption, in accordance to the exemplary embodiment of the present invention.

### Detailed description:

The present invention relates to a system for managing energy consumption in heating, ventilation and air conditioning system in a building and a control system which dynamically switches the electrical power supplied and generates a timing schedule to precondition the building with respect to the different time slabs and the tariff opted so as to efficiently manage the energy consumption and to minimize the electricity bill.

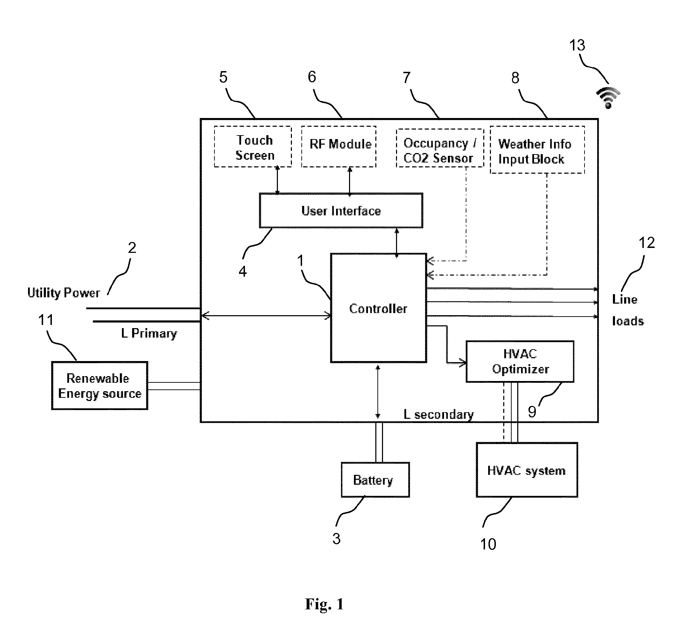

Fig. 1 shows the system for efficiently managing the energy consumption in HVAC system, in accordance to the exemplary embodiment of the present invention. The energy management system has a utility power (2) configured with the grid power to supply the power through the distribution units to the conditioning unit. A utility interface is provided to receive power from the utility source (2) and to control the power flow from the utility source to the line loads in the conditioning system.

A storage unit (3) is provided to get charged through the utility power input source (2), as communicated by the control unit (1). The storage unit (3) is a hardware device such as battery, capable of storing the energy and discharging the energy whenever needed. The storage unit (3) is configured through the storage interface with the energy management system such that the storage unit gets charged with the utility source (2) and supplies power to the required lines as communicated. The power grid input will be the primary power supply and the battery unit will be the secondary power input to the conditioning system.

A user interface (4) module is provided to enter the inputs by the user. The user interface module has a Touch screen (5) and a Radio frequency interface (6) for making the inputs with the system and enabling the user to monitor the various data with the system. The user interface module (4) receives the user inputs and forwards it to the control unit (1) for processing the data and also forwards the message given by the control unit to the respective user module (4). The touch screen (5) displays the user notifications and allows the user to perform configuration of the system.

The control unit (1) having a data analyzer, internal database, configuration units and communication units is provided with the energy management system. The control unit (1) is responsible for all the control action, data processing and monitoring of all the other modules. The control unit (1) is interfaced with the user interface (4), sensors (7 & 8), battery unit (3) and power input (2) and output lines (12) of the conditioning system. The internal database in control unit (1) is provided for storage and retrieval of tariff information, whether information, occupancy information, user travel information, line configurations, battery information, user inputs and other system requirements.

The control unit (1) receives the tariff and time of use information from the utility (2), take input from the electrical vehicle (not shown) in the building for analyzing the user travel habits and maintain the conditioning system. The user occupancy details are received through the occupancy sensor or CO₂ sensor (7). The weather information input unit (8) is provided to signal the weather forecast information to the control unit (1) and to maintain the conditioning system.

The wireless module (13) is provided with the user interface module (4) allows portable wireless user interface like mobile, tablet, laptop to connect to the system for configuration of the system. The control unit (1) is configured with the remote communication (13) to operate or monitor the system remotely. The wireless module (13) is provided such that the control unit (1) also establishes communication to receive the power tariff information from the power grid and to transfer data in between the control unit (1), storage unit (3), and user input devices (5 & 6), internal database, data analyzer and event manager.

The HVAC optimizer (9) is incorporated to boost the startup of conditioning system and automatically shut down boosting after the start up of the conditioning unit. The optimizer (9) changes the battery (3) wiring, which is connected in series to parallel to supply the surge current, to supply the surge current required during the start up of the HVAC system. The HVAC System will automatically shut down the optimizer (9) and revert the battery wiring to supply the nominal voltage after the start up time of HVAC unit, by reverting back the battery configuration from parallel to series after the start up time of HVAC unit.

The control unit (1) is configured to generate a timing schedule to precondition the building based on one or group selected from the utility tariff information, user occupancy schedule, user travel habits, weather forecast, and manually scheduled inputs from the user and power tariff from utility. The control unit (1) signals to pre-operate the conditioning system to maintain the desired temperature when the utility energy prices are low and operate the conditioning system at low electricity consumption when the utility energy prices are high.

The control system dynamically switches the electrical power supplies with respect to the different time slabs and the tariff opted and efficiently manages the energy consumption to minimize the electricity bill. The energy consumption management system has a utility interface module configures the utility source (2) i.e. power grid to supply the electrical power through the distribution lines to the HVAC system in required load ratings.

The HVAC system receives power from multiple distribution lines (12) for the different loads like light loads, heavy loads and non-critical loads. Separate distribution lines are provided for heavy load, light load and non critical load to supply the electrical power to the system as communicated. The distribution lines are measured for electrical parameters in the lines and to enable control the power flow into the particular line in the system.

The renewable energy source (11) such as wind, solar, geothermal etc is provided with the system, as an alternate power source. The storage unit is arranged to get alternately charged through these available alternate sources of energy. The alternate power source enables charging of the storage unit when power from the alternate source is economical for the system.

An event manager (not shown) is configured with the system for registering the events and communicating said events to the user. The event manager is configured with the system for registering the events and communicating the events happened in the system to the user.

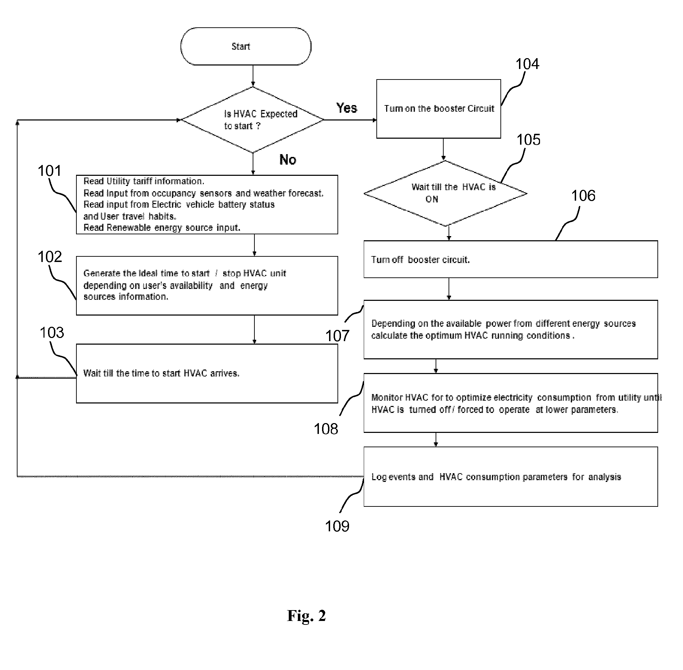

Fig. 2 shows a flow chart for efficiently managing the energy consumption, in accordance to the exemplary embodiment of the present invention. A method for efficiently managing energy consumption in HVAC system is provided. The HVAC energy management system dynamically precondition the building with respect to various inputs such as, low power tariff, occupancy level and weather forecast information, etc., thus efficiently controlling the energy consumption and minimizing the electricity bill.

The control unit read (101) the settings from the user, utility tariff information, occupancy level sensor / Co₂ sensor information, electrical vehicle and vehicle battery information for forecasting user travel habits. The line interface measures the load on each power lines and sends the measured load information to the data analyzer. The control unit checks for the configuration of the system with user inputs so that the control unit performs control operations to efficiently manage the energy consumption. The user is allowed to set the system inputs such as user interface, line configurations, storage configurations, system configurations and storage of settings in the database.

The utility interface signals to the data analyzer about the availability of utility power from the utility power source. The data analyzer receives the load information about the availability of utility power from the utility power source, the storage backup time information and the availability of the renewable power source for analyzing the data with respect to the user inputs. If there is no availability or high cost of utility power source, the control unit commands to turn down the utility power source and run the lines through the power from the storage unit. The data analyzer receives the charge level in the storage unit and shifts the line back to the power grid utility line if the charge level is critical in the storage unit.

The control unit receives the time slab information from the utility source and identifies the time slab where the electric price rate is in between the peak time and off-peak time, and signals to charge or discharge the storage unit based on the next time slab, available charge in the storage unit and the load condition in the lines. The control unit, during the time when energy prices are less, signals to charge the storage unit and supplies power to the HVAC system through the grid input source and during the time when energy prices are more signals to utilizing the charged power from storage unit and renewable sources.

The control unit, based on the user availability and the energy source information, generates ideal time (102) to start or stop the HVAC system. The HVAC load is driven by taking inputs from occupancy sensor, user time schedule and information from utility. In this system power stored in battery which is charged at off-peak time is used to drive HVAC control unit at optimum load. The system waits for the start up signal (103) from the control unit and precedes for precondition the building. The HVAC optimizer boosts the startup of conditioning system (104) and wait till the HVAC system get on (105). The optimizer gets automatically shut down (106) after the start up of the conditioning unit.

The HVAC optimizer takes power from multiple sources like installed battery, vehicle battery, renewable resources depending on the available power (107) to keep the HVAC unit running at optimum load even during the time when the utility prices are high (108). No power is drawn from the utility to keep the Electricity bill minimum. The control unit also signals draw power from the electrical vehicle battery, when vehicle battery is charged and the user is not expected to travel until the next off peak slab of the utility.

The event manager parallely receives (109) all the measured values, user inputs, time slab information and the data analyzed and the event manger categorize all the received information such as storage level critical, power off from grid, user has changed settings, change in time slab and grid update. The event manger notifies the user about the changes in the system. The event manager stores all the events in the database provided with the control system.

The control unit adopts pre-cooling, pre-heating and ventilation to remove the load of HVAC on battery during the time slab when energy prices are very high. When the system anticipates that the energy prices will be high in the coming time slab, the optimizer over cool / heat / ventilate the room and during the peak time the system reduce the HVAC load by shutting it down or running at a phase where the consumption is minimum.

The system according to the present invention will keep the user away from feeling any type of discomfort as the room is already pre cooled / heated / ventilated by the HVAC system. The control unit takes input from occupancy sensor and weather forecast reports in making a decision to pre cool/ heat / ventilates the room. User will be allowed to enter his daily schedule so that the system is in time synchronization with the user activities. The Energy management in HVAC system according to the present invention involves using the information on tariff charges supplied directly or indirectly by the electric power distributor to precondition the building under the most favorable economic conditions to the user.

The HVAC energy management system according to the present invention dynamically precondition the building with respect to various inputs such as, low power tariff, occupancy level and weather forecast information, etc., thus efficiently controlling the energy consumption and minimizing the electricity bill.

The foregoing description is a specific embodiment of the present invention. It should be appreciated that this embodiment is described for purpose of illustration only, and that numerous alterations and modifications may be practiced by those skilled in the art without departing from the spirit and scope of the invention. It is intended that all such modifications and alterations be included insofar as they come within the scope of the invention as claimed or the equivalents thereof.

## Claims

1. A system for managing energy consumption in a building, in particular heating, ventilation and air conditioning system, said system comprises,
an energy input source (2) receiving power from the utility power input and supplying power to said conditioning unit;
a storage unit (3) charging with said input source (2) and supplying power to the conditioning system as communicated by a control unit (1);
said control unit (1) configured to generate a timing schedule to precondition the building based on one or group selected from the utility tariff information, user occupancy schedule, user travel habits, weather forecast, manually scheduled inputs from the user and power price from utility;
wherein the control unit (1) signals to pre-operate the conditioning system to maintain desired temperature when the utility energy prices are low and operate the conditioning system at low electricity consumption when the utility energy prices are high.

2. The energy consumption management system as claimed in claim 1, wherein said control unit (1) establishes communication to receive the power tariff information from the power grid (2) and to transfer data in between the control unit (1), storage unit (3), user input devices (4), internal database, data analyzer and event manager.

3. The energy consumption management system as claimed in the claims 1, wherein an internal database is provided with control unit (1) for storage and retrieval of tariff information, whether information, occupancy information, user travel information, line configurations, battery information and user inputs.

4. The energy consumption management system as claimed in the claims 1, wherein said control unit (1) has data analyzer, configuration units and communication units.

5. The energy consumption management system as claimed in claims 1, wherein the manual schedule inputs and time slab information are entered by the user.

6. The energy consumption management system as claimed in claim 1, wherein the control unit (1) receives the tariff and time of use information from the utility (2).

7. The energy consumption management system as claimed in claim 1, wherein the control unit receives the user occupancy details from the occupancy or CO₂ sensor (7).

8. The energy consumption management system as claimed in claim 1, wherein the control unit (1) is configured with a remote communication to operate or monitor the system remotely.

9. The energy consumption management system as claimed in claim 1, wherein the control unit (1) take input from the weather forecasting unit servers (8) to maintain the conditioning system.

10. The energy consumption management system as claimed in claim 1, wherein the control unit (1) take input from the electrical vehicle in the building for analyzing the user travel habits and maintain the conditioning system.

11. The energy consumption management system as claimed in claims 1, wherein said control unit (1) is configured to calculate the electricity consumption by analyzing consumption patterns.

12. The energy consumption management system as claimed in claims 1, wherein HVAC optimizer (9) is incorporated to boost the startup of conditioning system and to automatically shut down boost after the start up of the conditioning unit.

13. The energy consumption management system as claimed in the claims 1, wherein an event manager is configured with the system for registering the events and communicating said events to the user.

14. The energy consumption management system as claimed in the claims 1, wherein said storage unit (3) is configured to charged through renewable sources of energy such as solar power wind power and geothermal power.

15. A method for managing energy consumption in a building, in particular heating, ventilation and air conditioning system, said method comprising the steps of:
receiving power from the power input source and supplying power through distribution units to the conditioning system;
storing the power through a storage unit by charging with said input source and supplying power to the conditioning system as communicated;
configuring a control unit to generate a timing schedule to precondition the building based on one or group selected from the utility tariff information, user occupancy schedule, user travel habits, weather forecast, manually scheduled inputs from the user and power price from utility;
wherein the control unit signals to pre-operate the conditioning system to maintain desired temperature when the utility energy prices are low and operate the conditioning system at low electricity consumption when the utility energy prices are high.
